(19)

Europäisches
Patentamt
European
Patent Office
Office européen
des brevets

(11) **EP 3 869 392 A1**

(12) **EUROPEAN PATENT APPLICATION**

(43) Date of publication:
**25.08.2021 Bulletin 2021/34**

(51) Int Cl.:
**G06K 9/00** (2006.01)      **G06K 9/46** (2006.01)
**G06T 7/70** (2017.01)

(21) Application number: **20158613.8**

(22) Date of filing: **20.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
**Toyota-shi, Aichi-ken 471-8571 (JP)**
• **Katholieke Universiteit Leuven**
**KU Leuven Research & Development**
**3000 Leuven (BE)**

(72) Inventors:
• **ABBELOOS, Wim**
**1140 BRUSSELS (BE)**
• **OLMEDA REINO, Daniel**
**1140 BRUSSELS (BE)**

• **ABDELKAWY, Hazem**
**1140 BRUSSELS (BE)**
• **HEYLEN, Jonas**
**3000 LEUVEN (BE)**
• **DE WOLF, Mark**
**3000 LEUVEN (BE)**
• **DAWAGNE, Bruno**
**3000 LEUVEN (BE)**
• **BARNES, Michael**
**3000 LEUVEN (BE)**
• **LEMKENS, Wim**
**3000 LEUVEN (BE)**
• **PROESMANS, Marc**
**3000 LEUVEN (BE)**
• **VAN GOOL, Luc**
**3000 LEUVEN (BE)**

(74) Representative: **Cabinet Beau de Loménie**
**158, rue de l'Université**
**75340 Paris Cedex 07 (FR)**

(54) **OBJECT POSE ESTIMATION FROM AN RGB IMAGE BY A NEURAL NETWORK OUTPUTTING A PARAMETER MAP**

(57)      A method for processing at least one image comprising inputting the image to at least one neural network (ANN1, ANN2), the at least one network being configured to deliver, for each pixel of a group of pixels belonging to an object of a given type visible on the image, an estimation of parameters of the object,
the method further comprising processing the estimations of the parameters of the object using an instance segmentation mask identifying instances of objects having the given type.

FIG.5

EP 3 869 392 A1

**Description**

<u>Field of the disclosure</u>

The present disclosure is related to the field of data processing using neural networks, for example image processing using neural networks.

<u>Description of the Related Art</u>

It has been proposed to use neural networks, for example convolutional neural network or feed-forward neural networks, to process data.

By way of example, it has been proposed to process images through such neural networks, for example to detect objects on images. Typically, in a training phase, known images are inputted to the neural network and a scoring system is used to adjust the neural network so that it behaves as expected on these known images. The neural networks are then used in a phase called a testing phase on actual images without any knowledge of the expected output.

The expression "neural network" used in the present application can cover a combination of a plurality of known networks.

A typical application of these image processing neural networks is the detection of objects in driving scenes so as to allow autonomous driving.

Generally, merely detecting that objects are visible is not sufficient and it is desirable to obtain the position in space (for example with respect to a vehicle equipped with a camera acquiring an image to be processed) and the orientation in space of detected objects. The position and the orientation in space of an object is called the 6D pose.

Detecting the 6D pose allows a vehicle to have knowledge of its surrounding and especially of the other vehicles.

Known methods perform a detection of, for example, a specific object so as to determine the 6D pose of this object when it is detected. This is too limiting and cannot be applied in a driving scene context wherein there are too many different models of vehicles.

Many other applications in which features which qualify an object other than the 6D pose still show poor performances.

There is a need for more efficient methods to process images.

<u>Summary of the disclosure</u>

The present disclosure overcomes one or more deficiencies of the prior art by proposing a method for processing at least one image comprising inputting the image to at least one neural network, the at least one network being configured to deliver, for each pixel of a group of pixels belonging to an object of a given type visible on the image, an estimation of parameters of the object,
the method further comprising processing the estimations of the parameters of the object using an instance segmentation mask identifying instances of objects having the given type.

The at least one image can be an image acquired by an image acquisition device from a set of image acquisition devices (and all the images from each image acquisition device can be processed using the above method) which may, for example, surround a vehicle.

The processing can comprise averaging the parameters over all the pixels of the group of pixels.

The at least one image may also be a frame from a video sequence.

It has been observed by the inventors of the present invention that it is possible to train a neural network so that it is configured to deliver an object parameter (or more precisely a value of an object parameter), for several (for example every) pixels which may belong to this object, and that this provides an even more precise estimation of this parameter. For example, the training can comprise using annotated data wherein the object parameters for objects of the given type are provided.

The group of pixels can include all the pixels that do belong to the object or merely a portion of the pixels that belong to the object, for example if a down-sampling is carried out.

It should be noted that the neural network may be configured to also deliver an estimation of parameters for pixels that do not belong to an object having the given type, and that these estimations may be random and without meaning.

By combining the instance segmentation mask and the estimations of the parameters available for every pixels in the group of pixels, it is possible to deduce, for the objects having the given type, a more precise estimation of the parameters.

Also, the expression "deliver" is directed to both the final output of the at least one neural network and to intermediary outputs.

It should be noted that in the present application, the type of an object, for example the given type as mentioned above, relate to an object type which may be a category including a plurality of distinct models. For example, the type can be vehicles and the object parameters can be delivered for every vehicle visible on the image regardless of the model, and "vehicle" includes cars, busses, etc. The training phase used to train the at least one neural network will therefore be done on images showing vehicles (cars, busses, etc), for which the following elements are known:

- the object parameters,
- the position in the image of the vehicles (in an instance segmentation mask).

Thus, the method can detect object parameters without having knowledge of a specific model of car.

Should the given type be more specific, for example "car", the training will be performed using images showing different models of cars.

Consequentially, the given type is defined in a preliminary training step and depends on what are the objects visible on the images used during training.

The advantages of the above method are related to the fact that many (for example all) the pixels of an object can contribute to the determination of the object parameters. This has been observed to provide good handling of occlusions of objects.

Also, the above method can be trained to be independent of the image acquisition device (i.e. camera independent) so as to be applied to different systems and especially different cameras. Once the neural network is configured as defined above, it can be used to process images from different cameras placed at different locations (for example on a vehicle) and therefore showing different scenes.

It should be noted that the image acquisition devices used to obtain the images processed by the present method may be fisheye cameras.

It has also been observed that it is possible to obtain statistics such as variance values for the object parameters (as every pixel of the group of pixels provides information on these object parameters), which can be used to measure uncertainty and in the tracking of objects.

In the above method, the instance segmentation mask can be provided from any known method for performing instance segmentation on images trained to identify objects having the given type. For example, it can be obtained using a neural network or using a portion of the at least one neural network which delivers said parameters.

It should be noted that the given type can be a type selected from a group of types of objects. For example, the segmentation mask can identify instances of objects having each type from the group of types of objects, and object parameters can be delivers for each pixel of a group of pixel belonging to an object having a type belonging to the group of types.

According to a particular embodiment, for each pixel of the group of pixels, the object parameters are relative or a portion of the object parameters are relative and a portion of the object parameters are absolute.

By relative, what is meant is that the parameter of the object is relative to the pixel (or of its location, etc.). For example, if the parameter is a location (in the space of the image), it may be a relative location such as a displacement between the pixel and this location.

Having relative parameters has been observed to facilitate obtaining a method which is camera independent, without involving additional training steps.

An absolute parameter does not depend on the pixel (for example on its location, etc.). For example, an absolute location can be the location in 2D or 3D with respect to a referential which is the same for every pixel.

According to a particular embodiment, for each pixel of the group of pixels, the object parameters include:

at least one 2D position element of the object in the at least one image, and/or
at least one 3D position element of the object in 3D space, and/or
at least one dimension element of the object in the at least one image, and/or
at least one dimension element of the object in 3D space,
at least one rotation element (for example defined by angles, sines and cosines of angles, quaternions, etc.).

The above listed object parameters can be either relative or absolute. It may be possible to select any combination of the above parameters depending on the application.

For example, it is possible to select parameters that allow determining the 6D pose of the object.

According to a particular embodiment, for each pixel of the group of pixels, the object parameters include a plurality of 2D position elements comprising:

- the positions in the at least one image of reference points associated with the object, and/or
- displacements between the pixel for which object parameters are delivered and the positions in the at least one image of reference points associated with the object.

It should be noted that the neural network may be configured to deliver a displacement for all the pixels of the image (for example), but that "displacements" determined for pixels that do not belong to an object having the given type may be random and without meaning. By combining the instance segmentation mask and these displacements available for every pixels in the group of pixels, it is possible to deduce, position information of the object of the given type.

It should be noted that the displacement may also be called an offset by the person skilled in the art. A displacement is a relative parameter.

According to a particular embodiment, the reference points are the projections into the plane of the image of points at given positions in 3D space associated with the object.

The given positions can be positions in 3D space such as, for example, the 3D center of the object.

According to a particular embodiment, the given positions are a plurality of corners of a 3D bounding box surrounding the object, or the centroids of the top and bottom faces of the 3D bounding box surrounding the objects.

A 3D bounding box is a rectangular cuboid, typically the smallest cuboid enclosing the object to which it is associated.

In this embodiment, the given positions are the corners of the 3D bounding box. Alternatively, plurality of predefined positions on a 3D bounding box can be used.

Also, the number of given positions can be 2 or more given positions. According to an example, and given that the bounding boxes are symmetrical, it is possible to use 4 corners as given positions on every 3D bounding box.

According to a particular embodiment, the given positions are a plurality of corners of a 3D bounding box surrounding the object, or the centroids of the top and bottom faces of the 3D bounding box surrounding the objects.

The use of these centroids is particularly useful as it provides not only information on the position in 3D space of the object but also on its height (in pixels on the image or in meters in 3D space).

According to a particular embodiment, for each pixel of the group of pixels, the object parameters include dimension elements of the object comprising the width and/or the height and/or the length of a 3D bounding box surrounding the object.

The width/height/length can be expressed in meters and are absolute parameters.

According to a particular embodiment, for each pixel of the group of pixels, the object parameters include at least one rotation element including an angle between the pixel's viewing direction and the object orientation.

The pixel's viewing direction is the direction of a ray passing through the pixel and the center of the image acquisition device (camera) used to acquire the at least one image. The object orientation is the object orientation in 3D space, for example the orientation of the bounding box with respect to a reference (for example the image acquisition device) and defined by a ray passing through the object center and oriented in the general direction of the object (for a vehicle, from back to front).

The orientation of the object can be a horizontal yaw angle, which is particularly adapted for situations where objects are on a planar ground, which is typically the case for vehicles.

According to a particular embodiment, for each pixel of the group of pixels, the object parameters include at least one rotation element including a rotation between the pixel's viewing direction and the object orientation, defined by a quaternion.

According to a particular embodiment, the method further comprises a step of determining the 6D pose of the object using the results of the processing.

It has been observed that using estimations of different positions elements and/or angles and/or orientations for multiple pixels provides a good basis for determining the 6D pose.

The person skilled in the art will know which parameters are needed to determine the 6D pose of the object.

For example, if reference points are used which are projections of corners of a bounding box, determining where 4 reference points are in 3D space allows determining the 6D pose, using for example the intrinsic calibration of the image acquisition device.

According to a particular embodiment, the at least one image is an image of a driving scene.

The invention also provides a method of tracking at least one object using a plurality of images each associated with different instants, comprising processing each image of the plurality of images using the method for processing as defined above.

This method is particularly useful when the 6D pose has been determined. It can also be applied to processing methods which only detect other object parameters.

According to a particular embodiment, for each instant there is an additional plurality of images each showing different viewpoints, the method comprising identifying the at least one object on the basis of images from the additional plurality of images each showing the object to be identified.

The identifying step can include assigning a single variable to the object based on the plurality of detections performed by the processing methods on the plurality of images.

This embodiment is particularly useful to handle occlusions, appearing and disappearing objects, and this results from the use of a plurality of images each showing different viewpoints.

According to a particular embodiment, identifying the at least one object on the basis of images form the additional plurality of images each showing the object to be identified comprises implementing a combinatorial assignment.

According to a particular embodiment, the method further comprises obtaining the mean and the variance associated with each estimation of parameters of the object of a pixel so as to predict a state of the object.

The mean and the variance have been observed to be particularly useful to perform predictions in the tracking, for example using Extended Kalman Filters.

The invention also provides a method for training at least one neural network to be used in the method as defined above.

It should be noted that the tracking may be performed by modules which are not machine-learning based which may not be affected by the training. Also, the training can include training the at least one neural network to deliver the instance segmentation mask.

According to a particular embodiment, the method comprises inputting a plurality of training images to the at least one neural network showing different objects having the given type.

According to a particular embodiment, training images used to train the at least one neural network are each associated with object parameters of objects having the given type visible on the training images.

The invention also provides a system for processing at least one image comprising at least one neural network, the at least one network being configured to deliver, for each pixel of a group of pixels belonging to an object of a given type visible on the image, an estimation of parameters of the object, the system further comprising a module for processing the estimations of the parameters of the object using an instance segmentation mask identifying instances of objects having the given type.

This system may be configured to perform any embodiment of the method as defined above.

The invention also provides a vehicle comprising a system as defined above and at least one image acquisition device.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Brief description of the drawings

How the present disclosure may be put into effect will now be described by way of example with reference to the appended drawings, in which:

- figures 1A and 1B are representations of 3D bounding boxes,
- figure 2 illustrates a displacement from a pixel to a reference point,
- figures 3A, 3B, and 4 illustrate how the position is deduced from angles formed between rays,
- figure 5 is a flow chart according to an example,
- figures 6A and 6B are top views of vehicles according to an example.

Description of the embodiments

An exemplary method for processing images will now be described.

In this exemplary method, the 6D pose of objects is determined. The invention is however not limited to the determination of 6D pose and can be directed to the determination of any object parameters.

Also, in the present description, the object parameters include relative displacements, angles, and rotations. Other object parameters can be delivered by the neural networks of the present disclosure.

Additionally, in the present invention, neural networks are used to determine the 6D pose and instance segmentation masks. The invention also applies to methods in which instance segmentation masks are determined using other known methods.

In the present description, vehicles are the objects of interest.

The present method can be performed on images acquired by a camera of a vehicle, typically Red-Green-Blue images.

In the present description, the 6D pose of an object can be determined on the basis of the determination of the location of a 3D bounding box surrounding this object and using as parameters displacements between pixels and reference points which are projections into the space of the image of given positions on a 3D bounding box.

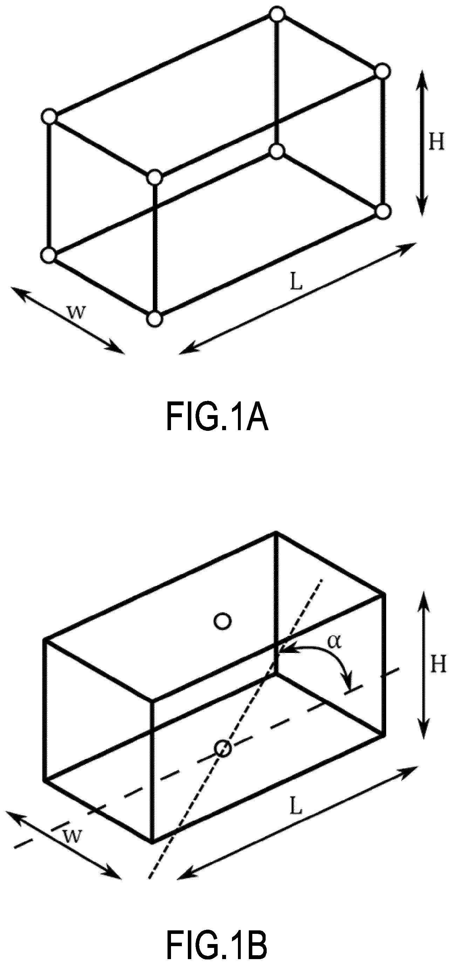

For example, on figure 1A, a first representation of a bounding box is shown in which circles represent the given positions in space that are chosen as to be the reference points once a projection into the plane of an image has been done: the 8 corners of the 3D bounding box. Knowing the position of the 8 corners in space is equivalent to knowing the 6D pose, if one dimension of the object is known.

An alternative representation is shown on figure 1B wherein there are only two given positions: the centroids of the top face and of the bottom face of the 3D bounding box. The two given positions are not sufficient to allow the determination of a 6D pose and the given positions are completed by the width W, the length L, the height H of the bounding box, and the yaw angle $\alpha$ (preferably the horizontal yaw angle, with respect to a reference axis which may be the viewing direction of a pixel).

An alternative to the yaw angle is the use of a quaternion.

Also, and as will be explained hereinafter, when an image is inputted to the one or several neural networks used to implement the invention, the at least one neural network is able to deliver: for each pixel of a group of pixels of the at least one image that belong to an object having a given type visible on the image, a displacement (a relative parameter) between the pixel and every reference point of the object of the pixel, wherein the reference points for a pixel represent projections into the plane of the at least one image of points at given positions in 3D space on a 3D bounding box surrounding the object of the pixel.

Examples of given positions were given in reference to figures 1A and 1B.

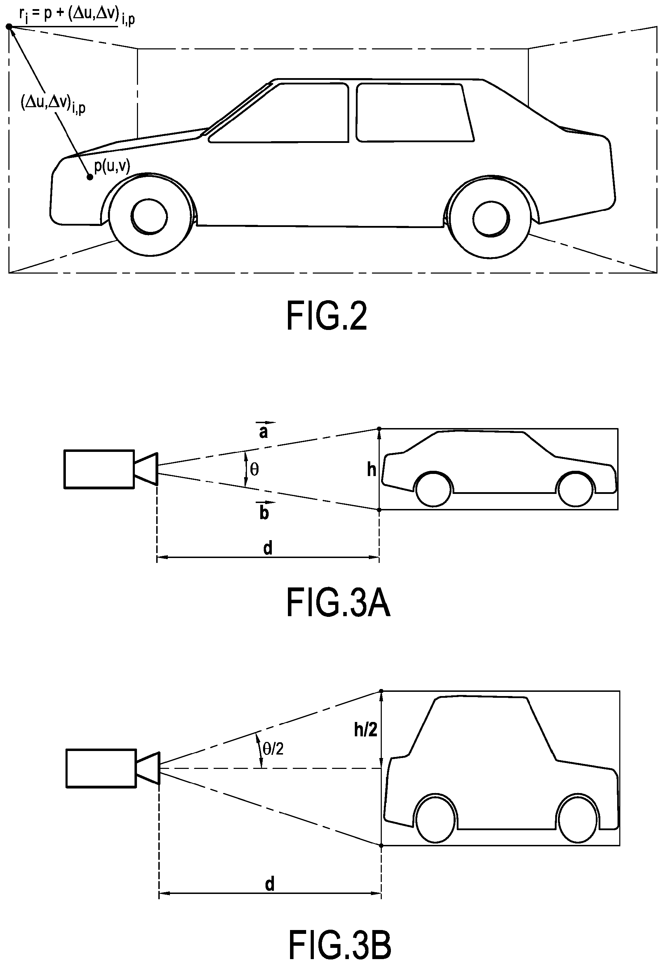

Figure 2 is an example showing the projection into the plane of an image of a 3D object and of its bounding box. For a pixel p belonging to the car and having 2D coordinates ($u$, $v$), and for a reference point $r_i$ corresponding to a given position in 3D space at the corner of the 3D bounding box shown on the figure, two values are used to define the displacement as ($\Delta u$, $\Delta v$).

The following notation can be used:

$$r_i = p + (\Delta u, \Delta v)_{i,p}$$

All the pixels which deliver the displacements ($\Delta u$, $\Delta v$) provide information on the location of the reference points (for example by averaging the location over all pixels that belong to a same object or instance) so as to predict the position in the image space of the reference points. This may also allow averaging out the predictions for the height, the width, and the length of the object.

Additionally, it is possible to determine the distance between a detected object and the camera used to acquire the image on which this object is visible.

For example, on figure 3A, the distance d between a vehicle and a camera is determined on the basis of an angle formed in 3D between the rays passing through a pair of top and bottom given positions, using parameters associated with the image acquisition device to acquire the at least one image. These parameters are well known to the person skilled in the art and may be referred to as intrinsic parameters of the image acquisition device (or camera).

The intrinsic parameters are used to re-project 2D points to rays in 3D space. Using the rays with dimensions predicted by the at least one neural network allows calculating the distance to the object and its position in 3D.

Also, using the intrinsic parameters allows re-projecting 2D points to rays in 3D space.

As shown on figure 3A, for a pair of top-bottom reference points (for example located at corners), the angle $\theta$ between the rays $\vec{a}$ and $\vec{b}$ passing by the image acquisition device used to acquire the at least one image is obtained by:

$$\cos(\theta) = \frac{\vec{a}\,\vec{b}}{\|\vec{a}\|\,\|\vec{b}\|}$$

Wherein $\vec{a}\,\vec{b}$ is the dot product of $\vec{a}$ and $\vec{b}$.

Thus, the distance $d$ can be expressed using this angle and the height $h$ measured between the top and bottom reference points:

$$d = \frac{h}{2 \tan\left(\frac{\theta}{2}\right)}$$

If the given positions on the bounding box are chosen so as to respect the symmetry of the objects, as proposed on figures 1A and 1B, it is also possible to determine the position in 3D space of the center of the object (or of its 3D bounding box).

The rotation of the car may also be obtained by compensating the predicted local viewing angles with the angle of each pixel's associated ray to the image acquisition device.

From the above, it can be seen how the 6D pose can be obtained.

Figure 3B is an alternative representation of figure 3A, where the distance is determined by $\theta/2$ and $h/2$.

It should be noted that in the above examples, it is assumed that the view is perpendicular with the observed objects.

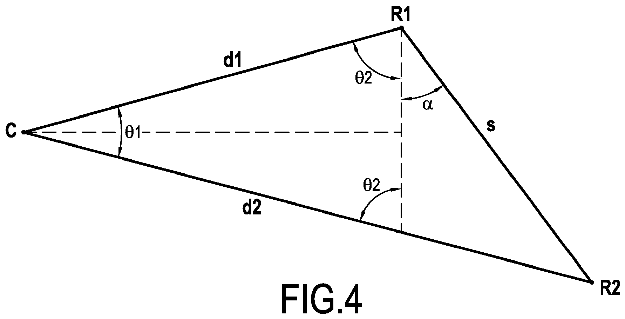

An alternative is visible on figure 4 for a generalized 6D pose estimation, which may be called a generalised unprojection. The unprojection refers to a way of determining the distance based on two reference points (in the plane of the image) and their distance in 3D (between the corresponding given positions). In this example, there is no limitation concerning having a perpendicular view, but it is required to estimate the full 3D rotation of the object, for example using a quaternion.

On this figure, C designates the camera center, R1 and R2 are a pair of reference points in 3D, $\theta_1$ is the angle between the rays of light towards the reference points, $s$ is the predicted size (for example the height of the bounding box), $\alpha$ is the rotation of the object projected in the 2D plane formed by the two pixel rays. This rotation can either be determined by the predicted quaternion, or by using the extrinsic camera parameters assuming a ground plane to which objects are parallel. The following values visible on the figure can be calculated:

$$\theta = \frac{180 - \theta_1}{2}$$

$$\widehat{R1} = \theta_2 + \alpha$$

$$\widehat{R2} = 180 - \theta_1 - \widehat{R1}$$

And, using the Law of Sines, the two distances to the given positions on a 3D bounding box are:

$$d_1 = \frac{s.\sin(\widehat{R2})}{\sin(\theta_1)}$$

$$d_2 = \frac{s.\sin(\widehat{R1})}{\sin(\theta_1)}$$

Thus, a closed-form solution is used to determine the 6D pose.

The angle between the light rays is thus used to determine the 6D pose.

It is possible to represent the angles using sines and cosines and these can be obtained from a neural network. The joint use of sines and cosines allows predicting continuous values and avoid the ambiguity and discontinuities in the inverse trigonometric functions to recover the angle. (for example by using the average between the two). It has been observed that the front and rear of objects such as cars can be confused as they may look similar. By predicting/delivering the double of the angle, it is possible to disambiguate the detection of the orientation because whether the car appears to be left or right, the same angle will be obtained (the bounding box will be the same, without any information concerning which side is the front or rear side.

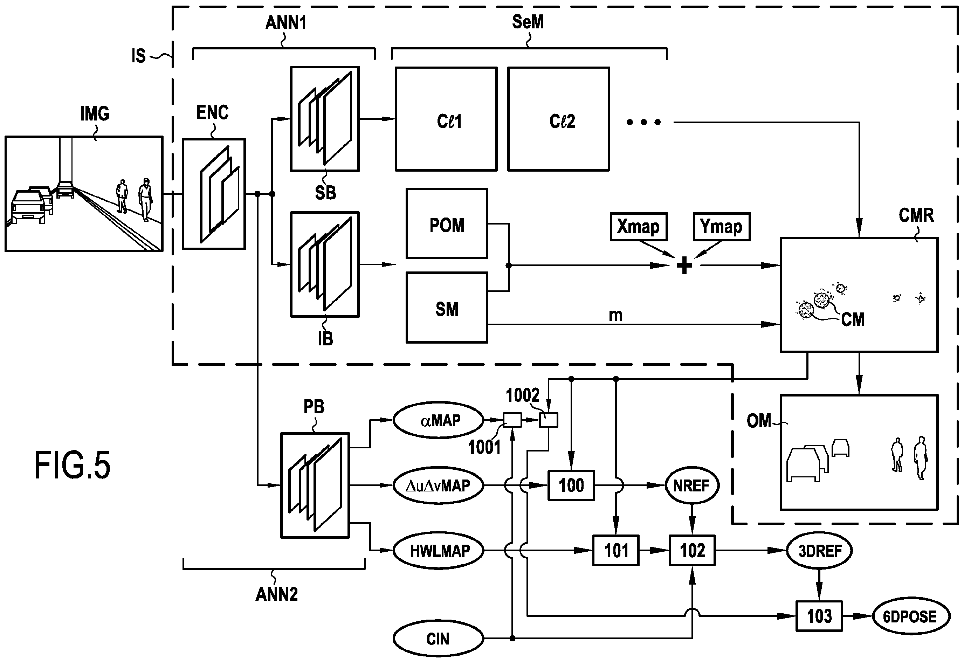

Figure 5 is a flowchart of an exemplary method of processing an image IMG. This method uses at least one neural network delivering displacements, angles, and dimensions as object parameters for each pixel.

This flowchart uses an image segmentation method IS analogous to the one described in PCT application PCT/EP2019/051191, the contents of which are incorporated by reference.

The image IMG is first processed by an encoder ENC which is a portion of a neural network shared with different decoders.

Concerning the instance segmentation, the encoder ENC and two branches SB and IB form the neural network ANN1 which only performs instance segmentation. As explained in the above cited application, the branch IB predicts a pixel offset map POM and sigma maps SM.

The branch SB outputs N seed maps SeM, one for each semantic class or type CL1, CL2, etc. In this example, multiple objects can be detected, for example cars and pedestrians.

POM and SM, along with coordinate vectors xmap, ymap and margins M, provide a clustering margin representation CMR of the image in which clusters CM of pixels indicate an instance of an object. The clustering margin representation CMR is a type of instance segmentation mask for the image.

From this representation, it is possible to represent a mask OM on which different cars and pedestrians are identified and displayed.

The invention is not limited to the instance segmentation of the above cited application and many methods can be used.

The output of the shared encoder ENC is processed in another branch PB dedicated to the 6D pose. The encoder ENC and the branch PB form a second neural network ANN2, for example a convolutional neural network.

This neural network is configured to deliver multiple elements and therefore has the corresponding outputs and is trained accordingly. Among these delivered elements there is:

- $\Delta u \Delta v$MAP a map of values ($\Delta u$, $\Delta v$) for each pixel of the image and configured so that, for the pixels that have the type CL1 or CL2, there are two values indicating a displacement between the pixel and every reference point of the object of the pixel, wherein the reference points for a pixel represent projections into the plane of the at least one image of points at given positions in 3D space on a 3D bounding box surrounding the object of the pixel. For pixels that do not belong to an object of type CL1 or CL2, the outputted values are without meaning. ($\Delta u$, $\Delta v$) are relative parameters.
- $\alpha$MAP a map viewing angles representing the local angle for every pixel between the pixel ray of light and the yaw of the bounding box as explained in reference to figure 1B. For pixels that do not belong to an object of type CL1 or CL2, the outputted viewing angles are without meaning. These values are relative.
- HWLMAP a map of height, width and length values for the above mentioned bounding boxes, determined for each pixel of the image but with correct values only for pixels belonging to an object of type CL1 or CL2. These values are absolute.

From the above, it can be seen that the same information is determined from a plurality of pixels. For example, the yaw angle and the width/height/length of a bounding box are determined for each pixel of the object, which allows obtaining a precise estimation. Additionally, the position in the plane of the image of the reference points is precisely estimated using as many pixels as possible: all the pixels that belong to an object.

In module 100, the instance segmentation mask CMR is used to act as a mask to only obtain only the ($\Delta u$, $\Delta v$) couples for pixels that belong to detected instances, and an average of these values is determined so as to obtain NREF the position in the plane of the image of the reference points of N 3D bounding boxes, N representing the number of detected objects/instances.

In module 101, the instance segmentation map CMR is used to act as a mask to obtain only the height/width/length values for the 3D bounding boxes of only the detected objects/instances (an average of all the values may be determined for pixels that belong to a same object).

In module 102, NREF, the output of module 101, and the intrinsic parameters CIN of the image acquisition device used to obtain IMG are used to obtain the position in space of the given positions on each bounding box 3DREF, using the calculations described in reference to figures 1A to 4.

In module 1001, $\alpha$MAP is compensated using the intrinsic parameters CIN so as to obtain absolute angle values (yaw values) for every pixel.

In module 1002, the instance segmentation mask CMR is used to act as a mask on the output of module 1001 to obtain the relevant yaw angles.

In module 103, the 6D poses 6DPOSE of all objects of types CL1 and CL2 visible on IMG are determined using the outputs of modules 102 and 1002. The pose $P$ of an object $i$, relative to a camera, can be expressed as: $P_i = [R_i, t_i]$,

wherein $R_i \in SO(3)$ is a rotation component and $t_i \in \mathbb{R}^3$ is the translation component. Training the neural network ANN1 can be done using the method described in application PCT/EP2019/051191.

Training the neural network ANN2 can be done using annotated images, i.e. Red-Green-Blue images for which an instance segmentation mask is known and for which the position of a bounding box (or of its projection or of its reference points) is known. The image acquisition device intrinsic parameters may also be used during training.

LIDAR pointcloud images may also be used to obtain annotation of the images.

The training may include the determination of a loss concerning the determination of the position of reference points.

For example a distance can be determined between a known position of a reference point and the output of the neural network for the same object and the same reference point. This distance (for example L1 or L2) provides a loss and training may be performed until this distance reaches 0.

The training may also include the determination of a loss concerning the determination of the yaw angle.

An angle can be determined as the difference between the obtained yaw angle and a pixel's viewing direction and the cosine and the sine of this calculated angle form a couple and the distance between this couple and the expected couple is determined.

In the above example, the yaw is used as the rotation around the y-axis in the camera coordinate system and there is one value per object. The pixel offset angle is the angle of the ray of light coming from the center of the image acquisition device to the pixel. The viewing angle is the angle between this ray of light and the object, and it can be calculated as the difference between the yaw and the pixel offset.

The loss is calculated, for example, as the L1 distance between a predicted pair of values (pi, p2) and $(\cos(\alpha), \sin(\alpha))$, wherein $\alpha$ is the viewing angle. Alternatively, it is possible to use the double of the viewing angle so as to obtain the disambuation described above.

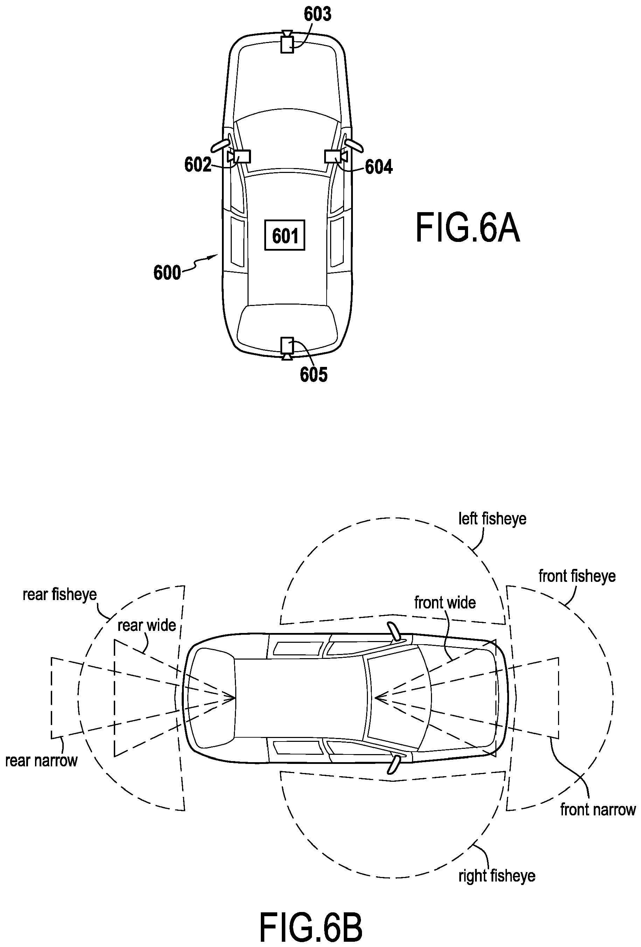

Figure 6A is a top view of a vehicle 600 comprising a system 601 configured to perform the method as defined above. This system may include a processor and a non-volatile memory including instructions which, when executed by the processor, perform the above method. The vehicle comprises 4 cameras 602, 603, 604, and 605 on each of its sides so as to cover 360° degrees around the vehicle.

Fisheye cameras may be used.

Figure 6B shows how a plurality of cameras can lead to overlapping zones as some wide angle cameras have a viewing angle of 190° which leads to overlapping. Additional camera such as tele-cameras and normal cameras can be used.

When the above method is performed on every image coming from these cameras, a 6D pose of a same object can be determined multiple times. It is possible to update a tracked version of this object based on multiple observations at different times and using different cameras.

The invention can be used in the context of tracking objects. For example, if $i$ designates an instance such as a vehicle to be tracked, it is possible to determine a multidimensional mean $z_i$ and a covariance matrix $Z_i$ associated with the variable $z_i$. In fact, the at least one neural network of the invention can deliver, for each group of pixels, variance and mean values associated with the group of pixels.

Detection phase

Consequently, the detections on one image in the context of tracking are approximated as a set of multidimensional normal variables $\hat{z}_i \sim N(z_i, Z_i)$, with $i = 1, ..., m$.

For instance, using the above method, the vectors $z_i$ can be composed of 19 values:

- horizontal and vertical coordinates of the 8 corners of the 3D bounding boxes in the image space (i.e. the reference points when using the representation of figure 1A),
- the width, the height and the length of the vehicle.

The vectors $z_i$ may also be called observations, i.e. the output of the above described method.

It should be noted that the method is not limited to neural networks using 8 reference points, as in the above example. It is also possible to use the representation of figure 1B during the tracking.

State prediction phase

The set of tracked vehicles are described, at time t, with a set of multidimensional normal variables $\hat{x}_j \sim N(x_j, X_j)$ with $j = 1, ..., n$. The state of each tracked object (for example vehicle) can be predicted from its previous state at t-1. The prediction phase of an Extended Kalman Filter is used:

$$x_j \leftarrow f(x_j)$$

$$X_j \leftarrow FX_jF^T + Q$$

Wherein *f* is a state transition model, *F* is the Jacobian matrix of *f*, $X_j$ is the covariance matrix associated with $x_j$, and *Q* is the covariance matrix of the expected noise.

For instance, the state vectors $x_j$ can be composed of the following 8 values:

- The 3D position of the object,
- The width, height, and length of the 3D bounding box associate with this object
- The yaw angle of the object.
- The speed of the object.

In this example, the state vectors $x_j$ represent the means of the estimated vehicle states (3D position, dimensions, speed).

The state transition function f can assume a simple dynamics, with objects moving forward according to their speed. However, more elaborated transition functions can be used.

Observation prediction phase

Then it is possible to predict observations $y_j$ from the predicted states $x_j$. To do so, the equations in the first half of the update phase of an Extended Kalman Filter are used:

$$y_j \leftarrow h(x_j)$$

$$Y_j \leftarrow HX_jH^T + R$$

With h being the observation model, H is the Jacobian matrix of h, and R is the covariance matrix of the expected noise.

For example, *h* can project the 8 corners of the 3D bounding box of an object into the space of the image and concatenates its width, height, and length to the result.

Assignment phase

Then, a combinatorial phase is taking place. The observations $\{z_i\}_{i=1}^m$ defined above are assigned to the predicted observations $\{y_j\}_{j=1}^n$ also defined above. An assignment from observations to predictions is defined as a partial injective function $\{1,...,m\} \rightarrow \{1,...,n\}$. This means that an observation is assigned to at most one prediction, and that one prediction is assigned to at most one observation. The specific assignment $\bar{a}$ is defined such that the following total cost function is minimized:

$$\sum_{i \in Dom(a)} (C(i, a(i)) - T_a)$$

The cost function C is defined as the Mahalanobis distance $D_M$ between the observation and the prediction.

$$C(i,j) = D_m(z_i, y_j) = \sqrt{(z_i - y_j)^T (Z_i + Y_j)^{-1} (z_i - y_j)}$$

In other words, it is the Mahalanobis norm of $s = z_i - y_j$. The value $T_a$ is the threshold cost over which no assignment should occur.

It is possible to only use a subset of the values contained in the observations and predictions to perform this assignment phase.

For instance, the 8 corners in the space of the image can be used to assign observations to predictions. $T_a$ can be set to 6. Solving the assignment problem can comprise reducing it to the problem of finding the k-shortest paths in a directed graph. This may be solved using Suurballe's algorithm.

Correction phase

Subsequently, the difference between the actual observations $z_i$ and the predicted observations $y_{a(i)}$ are used to correct the predicted states $x_{a(i)}$. For each $i \in Dom(a)$, we apply the second half of the update phase to an Extended Kalman Filter:

$$j \leftarrow a(i)$$

$$s \leftarrow z_i - y_j$$

$$S \leftarrow Z_i + Y_j$$

$$K \leftarrow PH^T S^{-1}$$

$$x_j \leftarrow x_j + Ks$$

$$X_j \leftarrow X_j - KX_j K^T$$

$s$ is the difference between $z_i$, what has been observed, and $y_j$, what has been predicted and therefore is used to correct the state $x_j$.

Reprojection phase

For each $i \notin Dom(a)$, i.e. for each observation that could not be assigned to a known and tracked vehicle, a new vehicle state is created by approximating the inverse of the observation function $h$. This approximation uses some assumptions about the state of the actual vehicle.

$$m \leftarrow m + 1$$

$$x_m \leftarrow h^\sim(z_i, p)$$

$$X_m \leftarrow H^\sim Z_i H^{\sim T} + P$$

In which $h^\sim$ is the approximated inverse of h, p is some prior knowledge, $H^\sim$ is the Jacobian matrix of $h^\sim$ at $z_i$ and p, and P is the covariance matrix of the expected noise. The above equations allow determining a new value $x_m$ from a given $z_i$.

For instance, $h^\sim$ can approximate the reprojection of the vertical edges of a 3D bounding box using only the predicted height of the vehicle. The position and the orientation of the object can be approximated from there, for example using the method defined before. The prior knowledge $p$ can be set in $P$ to 20 meters per second.

Non-maximal suppression phase

Should any failure happen during the detection phase or during the assignment procedure, it may happen that a same object produces several tracked states. To prevent this a posteriori, a non-maximal suppression is performed over the set of states $x_j$. First, the list of states is sorted in descending order of confidence. Then, for each state $x_j$, all subsequent states $x_k$ that verify the following inequation are removed:

$$D_M(x_j, x_k) = \sqrt{(x_j - x_k)^T (X_j + X_k)^{-1} (x_j - x_k)} < T_{nms}$$

$T_{nms}$ is the threshold over the Mahalanobis distance over which two vehicles are considered the same.

It is possible to only use a subset of the values contained in the states vectors to perform this non-maximal suppression phase.

For instance, the 3D position of an object can be used to perform the non-maximal suppression. The threshold $T_{nms}$ can be set to 6. The confidence measure is in the number of updates recorded over a state.

Should multiple cameras be used, as shown on figures 6A and 6B, it is possible to perform the state prediction phase (obtaining $x_j$), the non-maximal suppression phase once per unit of time. The observation prediction phase, the assignment phase, the correction phase, and the reprojection phase can be performed once per camera (i.e. the above calculations are performed for each camera individually).

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

**Claims**

1. A method for processing at least one image comprising inputting the image to at least one neural network, the at least one network being configured to deliver, for each pixel of a group of pixels belonging to an object of a given type visible on the image, an estimation of parameters of the object,
   the method further comprising processing the estimations of the parameters of the object using an instance segmentation mask identifying instances of objects having the given type.

2. The method of claim 1, wherein for each pixel of the group of pixels, the object parameters are relative or a portion of the object parameters are relative and a portion of the object parameters are absolute.

3. The method of claim 1 or 2, wherein for each pixel of the group of pixels, the object parameters include:

   at least one 2D position element of the object in the at least one image, and/or
   at least one 3D position element of the object in 3D space, and/or
   at least one dimension element of the object in the at least one image, and/or
   at least one dimension element of the object in 3D space, and/or
   at least one rotation element.

4. The method of claim 3, wherein for each pixel of the group of pixels, the object parameters include a plurality of 2D position elements comprising:

   - the positions in the at least one image of reference points associated with the object, and/or
   - displacements ($\Delta u \Delta v MAP$) between the pixel for which object parameters are delivered and the positions in the at least one image of reference points associated with the object.

5. The method of claim 4, wherein the reference points are the projections into the plane of the image of points at given positions in 3D space associated with the object.

6. The method of claim 5, wherein the given positions are a plurality of corners of a 3D bounding box surrounding the object, and/or the centroids of the top and bottom faces of the 3D bounding box surrounding the objects.

7. The method of any one of claims 3 to 6, wherein for each pixel of the group of pixels, the object parameters include dimension elements of the object comprising the width and/or the height and/or the length ($HWLMAP$) of a 3D bounding box surrounding the object.

8. The method of any one of claims 3 to 7, wherein for each pixel of the group of pixels, the object parameters include at least one rotation element comprising an angle ($\alpha MAP$) between the pixel's viewing direction and the object orientation.

9. The method of any one of claims 3 to 8, wherein for each pixel of the group of pixels, the object parameters include at least one rotation element comprising a rotation between the pixel's viewing direction and the object orientation, defined by a quaternion.

10. The method of any one of claims 1 to 9, further comprising a step of determining the 6D pose ($6DPOSE$) of the object using the results of the processing.

11. The method according to any one of claims 1 to10, wherein the at least one image is an image of a driving scene.

12. A method of tracking at least one object using a plurality of images each associated with different instants, comprising processing each image of the plurality of images using the method for processing according any one of claims 1 to 11.

13. The method of claim 12, wherein for each instant there is an additional plurality of images each showing different viewpoints, the method comprising identifying the at least one object on the basis of images from the additional plurality of images each showing the object to be identified.

14. The method of claim 13, wherein identifying the at least one object on the basis of images from the additional plurality of images each showing the object to be identified comprises implementing a combinatorial assignment.

15. The method of any one of claims 12 to 14, further comprising obtaining the mean and the variance associated with each estimation of parameters of the object from a group of pixels so as to predict a state of the object.

16. A method for training at least one neural network to be used in the method according to any one of claims 1 to 15.

17. The method of claim 16, comprising inputting a plurality of training images to the at least one neural network showing different objects having the given type.

18. The method of claim 16 or 17, wherein training images used to train the at least one neural network are each associated with object parameters of objects having the given type visible on the training images.

19. A system for processing at least one image comprising at least one neural network, the at least one network being configured to deliver, for each pixel of a group of pixels belonging to an object of a given type visible on the image, an estimation of parameters of the object,
the system further comprising a module for processing the estimations of the parameters of the object using an instance segmentation mask identifying instances of objects having the given type.

20. A vehicle comprising a system according to claim 19 and at least one image acquisition device.

21. A computer program including instructions for executing the steps of a method according to any one of claims 1 to 18 when said program is executed by a computer.

22. A recording medium readable by a computer and having recorded thereon a computer program including instructions for executing the steps of a method according to any one of claims 1 to 18.

FIG.1A

FIG.1B

$$r_j = p + (\Delta u, \Delta v)_{i,p}$$

$$(\Delta u, \Delta v)_{i,p}$$

$$p(u,v)$$

FIG.2

$\vec{a}$

$\theta$

$\vec{b}$

$h$

$d$

FIG.3A

$\theta/2$

$h/2$

$d$

FIG.3B

FIG.4

FIG.5

603

602 601 604

600

FIG.6A

605

left fisheye

rear fisheye front fisheye

rear wide front wide

rear narrow front narrow

right fisheye

FIG.6B

Europäisches
Patentamt

European
Patent Office

Office européen
des brevets

## EUROPEAN SEARCH REPORT

Application Number

EP 20 15 8613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK KIRU ET AL: "Pix2Pose: Pixel-Wise Coordinate Regression of Objects for 6D Pose Estimation", 2019 IEEE/CVF INTERNATIONAL CONFERENCE ON COMPUTER VISION (ICCV), IEEE, 27 October 2019 (2019-10-27), pages 7667-7676, XP033723236, DOI: 10.1109/ICCV.2019.00776 | 1-3,10, 16-19, 21,22 | INV. G06K9/00 G06K9/46 G06T7/70 |
| Y | * the whole document * | 11-13, 15,20 | |
| A | | 4-6,8,9, 14 | |
| Y | US 10 304 191 B1 (MOUSAVIAN ARSALAN [US] ET AL) 28 May 2019 (2019-05-28) * abstract; Figs. 1, 4, 5;; columns 1-9 * | 11-13, 15,20 | |

TECHNICAL FIELDS
SEARCHED        (IPC)

G06K
G06T

~~The present search report has been drawn up for all claims~~

| Place of search | Date of completion of the search | Examiner |
|---|---|---|
| The Hague | 1 September 2020 | Neubüser, Bernhard |

Europäisches
Patentamt
European
Patent Office
Office européen
des brevets

Application Number

EP 20 15 8613

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 8, 9(completely); 2-6, 10-22(partially)

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

**EP 20 15 8613**

The Search Division considers that the present European patent application does not comply with the requirements of unity of invention and relates to several inventions or groups of inventions, namely:

1. claims: 1, 8, 9(completely); 2-6, 10-22(partially)

   Processing at least one image, the processing comprising inputting the image to at least one neural network, the at least one network being configured to deliver, for each pixel belonging to an object of a given type visible in the image, an estimation of parameters of the object, the method further comprising processing the estimations of the parameters of the object using an instance segmentation mask identifying instances of objects having the given type, wherein the parameters are relative.

1.1. claims: 16-22(partially)

   Training a neural network to be used in the known method according to claim 1.
   ---

2. claims: 7(completely); 2-6, 10-22(partially)

   Processing at least one image, the processing comprising inputting the image to at least one neural network, the at least one network being configured to deliver, for each pixel belonging to an object of a given type visible in the image, an estimation of parameters of the object, the method further comprising processing the estimations of the parameters of the object using an instance segmentation mask identifying instances of objects having the given type, wherein part of the parameters are relative and part are absolute.
   ---

3. claims: 11-22(partially)

   Applying the known method of claim 1 to images of a driving scene.
   ---

4. claims: 12-15, 19-22(all partially)

   Tracking an object in images using the known method of claim 1.
   ---

Please note that all inventions mentioned under item 1, although not necessarily linked by a common inventive concept, could be searched without effort justifying an additional fee.

**ANNEX TO THE EUROPEAN SEARCH REPORT
ON EUROPEAN PATENT APPLICATION NO.**

EP 20 15 8613

This annex lists the patent family members relating to the patent documents cited in  the above-mentioned European search report.
The members are as contained in the European Patent Office EDP file on
The European Patent Office is in no way liable for these particulars which are merely given for the purpose of information.

01-09-2020

| Patent document cited in search report | | Publication date | Patent family member(s) | | Publication date |
|---|---|---|---|---|---|
| US 10304191 | B1 | 28-05-2019 | US | 10304191 B1 | 28-05-2019 |
| | | | US | 2019340432 A1 | 07-11-2019 |
| | | | US | 2020364454 A1 | 19-11-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2019051191 W